(19)

Europäisches
Patentamt
European
Patent Office
Office européen
des brevets

(11) **EP 4 645 460 A1**

(12) **EUROPEAN PATENT APPLICATION**

(43) Date of publication:
**05.11.2025 Bulletin 2025/45**

(51) International Patent Classification (IPC):
$H01M\ 4/36^{(2006.01)}$      $H01M\ 4/131^{(2010.01)}$
$H01M\ 4/505^{(2010.01)}$    $H01M\ 4/525^{(2010.01)}$
$H01M\ 4/58^{(2010.01)}$      $H01M\ 10/0525^{(2010.01)}$

(21) Application number: **25169246.3**

(22) Date of filing: **08.04.2025**

(52) Cooperative Patent Classification (CPC):
**H01M 4/364; H01M 4/131; H01M 4/505;
H01M 4/525; H01M 4/5825; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.04.2024 KR 20240056162**

(71) Applicant: **SAMSUNG SDI CO., LTD.
Yongin-si, Gyeonggi-do 17084 (KR)**

(72) Inventors:
• **KIM, Young-Ki
17084 Yongin-si (KR)**

• **CHOI, Aram
17084 Yongin-si (KR)**
• **KIM, Sangmi
17084 Yongin-si (KR)**
• **DOO, Sungwook
17084 Yongin-si (KR)**
• **KANG, Gwiwoon
17084 Yongin-si (KR)**
• **LEE, Soonrewl
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)    Examples of the disclosure include a positive electrode active material for a rechargeable lithium battery, a positive electrode including the positive electrode active material, and a rechargeable lithium battery including the positive electrode active material. Examples of the disclosure include a positive electrode active material including a first particle containing a compound having a first average particle diameter, and a second particle containing a compound having a second average particle diameter larger than the first average particle diameter.

FIG. 6

EP 4 645 460 A1

**Description**

BACKGROUND

Examples of the present disclosure herein relate to a positive electrode active material for a rechargeable lithium battery, a positive electrode including the positive electrode active material, and a rechargeable lithium battery including the positive electrode active material, and more particularly, to a positive electrode active material containing an olivine-based lithium compound, a positive electrode including the positive electrode active material, and a rechargeable lithium battery including the positive electrode active material.

With increasing use of battery-using electronic devices, such as, e.g., mobile phones, laptop computers, electric vehicles, and the like, demand for rechargeable batteries with high energy density and high capacity has increased. Accordingly, improving performance of the rechargeable lithium battery may be advantageous.

A rechargeable lithium battery typically includes a positive electrode and a negative electrode containing an active material capable of intercalation and deintercalation of lithium ions, and an electrolyte solution. Electrical energy is produced by oxidation and reduction reactions when the lithium ions are intercalated and deintercalated into/from the positive electrode and the negative electrode.

SUMMARY

Examples of the present disclosure include a positive electrode active material having high energy density, high operating voltage, high conductivity, and high mixture density.

Examples of the present disclosure also include a rechargeable lithium battery having high energy density, high operating voltage, high charge-discharge efficiency, and a long lifespan.

An example embodiment of the present disclosure includes a positive electrode active material including a first particle containing a compound represented by Formula 1 below, and having a first average particle diameter, and

a second particle containing a compound represented by Formula 2 below, and having a second average particle diameter larger than the first average particle diameter,
wherein a ratio $(x1/z2)$ of $x1$ in Formula 1 below to $z2$ in Formula 2 below is about 1.3 to about 2.0:

$$\text{Formula 1:} \quad Li_{a1}Mn_{x1}Fe_{y1}B_{z1}PO_{4-b1}$$

In Formula 1 above, $0.8 \leq a1 \leq 1.2$, $0.4 \leq x1 \leq 0.6$, $0.4 \leq y1 \leq 0.6$, $0 \leq z1 \leq 0.05$, $0 \leq b1 \leq 0.05$, and $x1 + y1 + z1 = 1$ are satisfied, and
B is or includes at least one of Al, Ti, V, Mg, and Nb,

$$\text{Formula 2:} \quad Li_{a2}Ni_{x2}Co_{y2}Mn_{z2}O_{2-b2}$$

In Formula 2 above, $0.8 \leq a2 \leq 1.2$, $0.5 \leq x2 \leq 0.8$, $0 \leq y2 \leq 0.3$, $0.1 \leq z2 \leq 0.50$ $0 \leq b2 \leq 0.05$, and $x2 + y2 + z2 = 1$ are satisfied.

In an example embodiment of the present disclosure, a positive electrode for a rechargeable lithium battery includes a positive electrode current collector, and a positive electrode active material layer on the positive electrode current collector, and the positive electrode active material layer includes the positive electrode active material according to an example embodiment of the present disclosure, a conductive material, and a binder.

In an example embodiment of the present disclosure, a rechargeable lithium battery includes the positive electrode according to an example embodiment of the present disclosure, a negative electrode having a negative electrode current collector and a negative electrode active material layer on the negative electrode current collector, and a separator between the positive electrode and the negative electrode.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:

FIG. 1 is a simplified conceptual diagram illustrating a rechargeable lithium battery according to example embodiments of the present disclosure;

FIGS. 2 to 5 are schematic views each illustrating a rechargeable lithium battery according to an example embodiment, FIG. 2 illustrates a cylindrical battery, FIG. 3 illustrates a prismatic battery, and FIGS. 4 and 5 illustrate pouch-type batteries;

FIG. 6 is an enlarged view of a positive electrode active material layer of a rechargeable lithium battery according to example embodiments of the present disclosure;

FIG. 7 is a scanning electron microscope (SEM) image of a positive electrode active material according to Example 1 of the present disclosure; and

FIG. 8 is a SEM image of a positive electrode active material according to Example 2 of the present disclosure.

DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that, when an element is referred to as being "on" another element, the element may be directly on the other element, or intervening elements may be present therebetween. In the drawings, thicknesses of components are exaggerated for effectively explaining the technical contents. Like reference numerals or symbols refer to like elements throughout the specification.

Example embodiments described herein are explained with reference to cross-sectional views and/or plan views, which are ideal illustrations of the present disclosure. In the drawings, thicknesses of films and regions are exaggerated for effectively explaining the technical contents. Accordingly, the regions illustrated in the drawings have schematic properties, and the shapes of the regions illustrated in the drawings are intended to illustrate a specific shape of the regions of the device and are not intended to limit the scope of the disclosure. In various example embodiments of the present specification, terms such as first, second, and third are used to describe various components, but these components should not be limited by these terms. These terms are merely used to distinguish one component from another. Example embodiments described and illustrated herein also include complementary embodiments thereof.

The terminology used herein is for describing example embodiments and is not intended to limit the present disclosure. In this specification, the singular forms are intended to include the plural forms as well, unless the context clearly indicates otherwise. The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and a reaction product of components.

Unless otherwise defined in this specification, a particle diameter may be an average particle diameter. Also, the particle diameter may mean an average particle diameter (D50) which refers to a diameter of particles at a cumulative volume of about 50 vol% in a particle size distribution. The average particle diameter (D50) may be measured by a method widely known to those skilled in the art, for example, may be measured by a particle size analyzer, or may also be measured using a transmission electron microscope (TEM) image or a scanning electron microscope (SEM) image. Alternatively, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

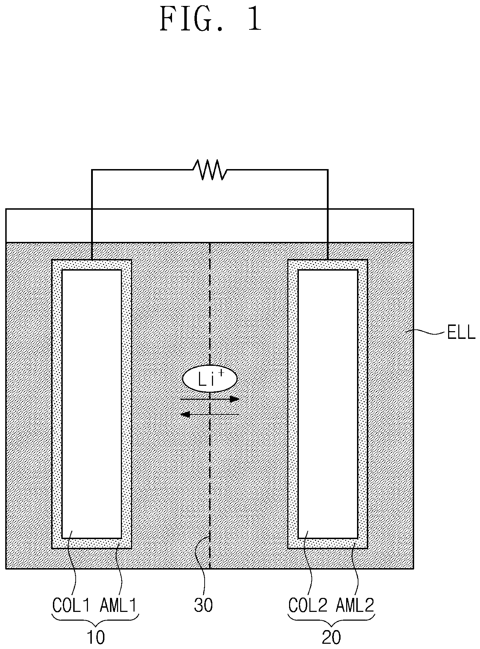

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

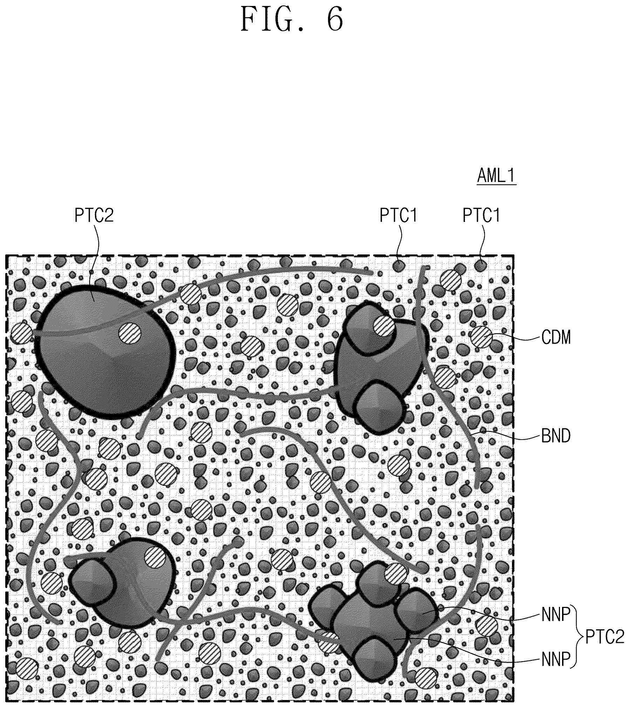

The positive electrode 10 for a rechargeable lithium battery includes a current collector COL1 and a positive electrode active material layer AML1 formed on the current collector COL1. The positive electrode active material layer AML1 includes a positive electrode active material, and further includes a binder and a conductive material. The positive electrode active material layer AML1 according to example embodiments of the present disclosure is described in detail with reference to FIG. 6. Al may be included in the current collector COL1, but the current collector COL1 is not limited thereto.

## Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include a range of about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon, and silicon particles and an amorphous carbon coating layer on a surface of the core.

The Si-based negative electrode active material or the Sn-based negative electrode active material may be used in combination with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include at least one of a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or, a coating layer including an organic material and a coating layer including an inorganic material may be stacked.

## Electrolyte Solution ELL

The electrolyte solution ELL for a rechargeable lithium battery may include at least one of a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio of about 1:1 to about 1:9.

In examples, the lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

## Rechargeable Lithium Battery

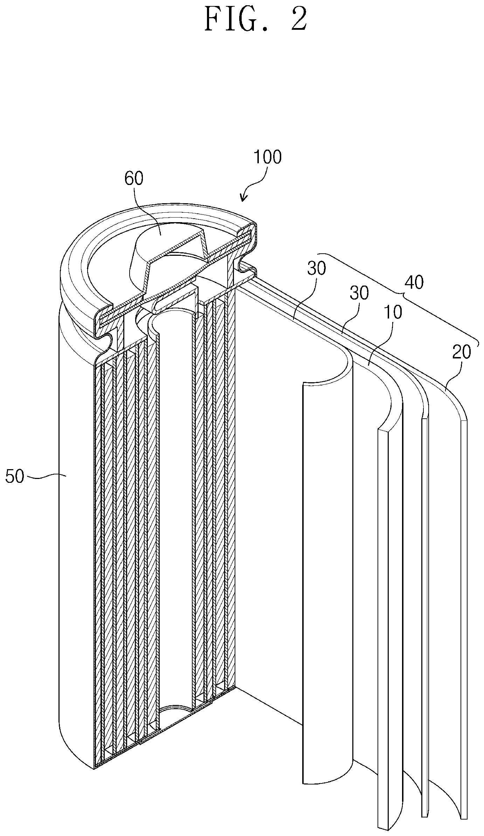

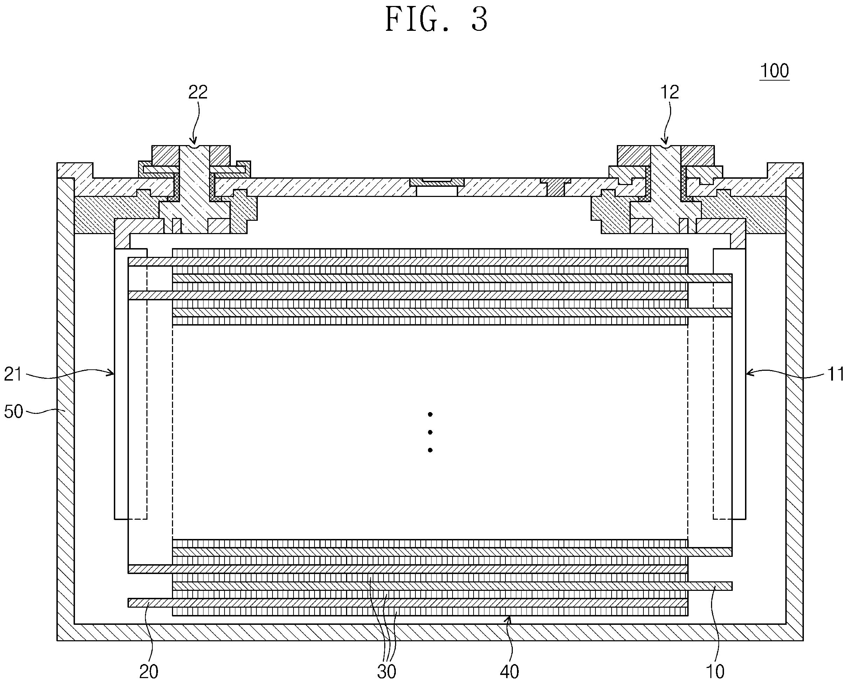

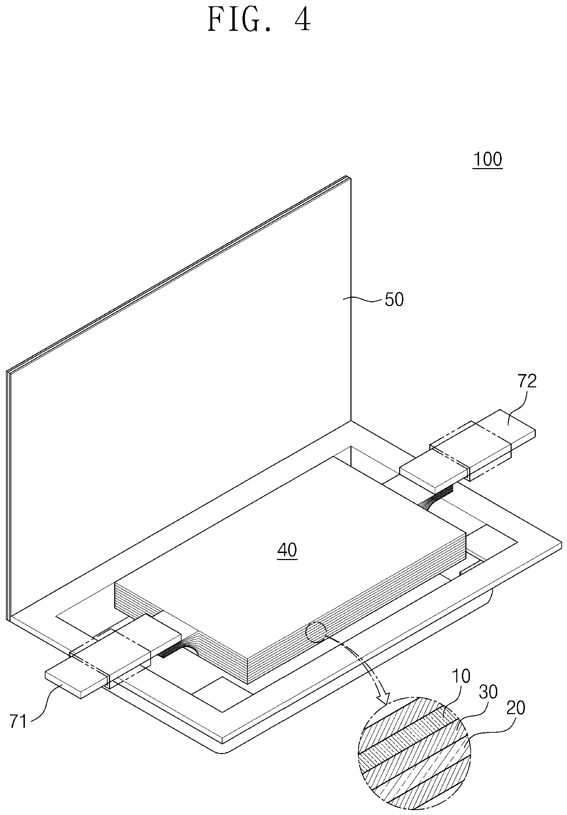

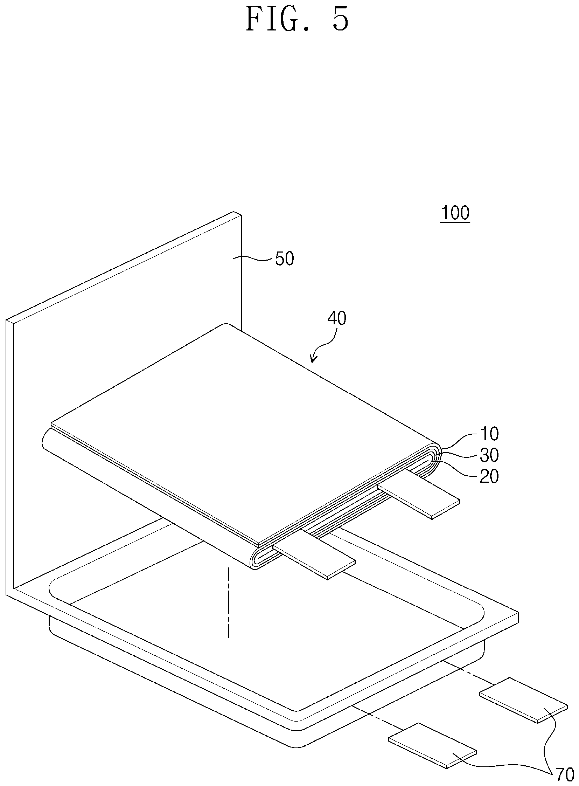

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or may include, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is an enlarged illustration of a positive electrode active material layer of a rechargeable lithium battery, according to example embodiments of the present disclosure. Referring to FIG. 6, as described above, the positive electrode active material layer AML1 (see FIG. 1) includes a first particle PTC1, a second particle PTC2, a conductive material CDM, and a binder BND. A plurality of first particles PTC1 and a plurality of second particles PTC2 may constitute a positive electrode active material according to example embodiments of the present disclosure.

The positive electrode active material layer AML1 may further include an additive that may be configured as a sacrificial positive electrode.

An amount of the positive electrode active material PTC1 and PTC2 in the positive electrode active material layer AML1 may be in a range of about 90 wt% to about 99 wt% with respect to 100 wt% of the positive electrode active material layer AML1. An amount of each, or at least one, of the binder BND and the conductive material CDM may be in a range of about 0.5 wt% to about 5 wt% with respect to 100 wt% of the positive electrode active material layer AML1.

The binder BND may bind the first particle PTC1, the second particle PTC2, and the conductive material CDM to each other. For example, the binder BND may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but an example embodiment of the present disclosure is not limited thereto.

The conductive material CDM may be configured to improve conductivity of the positive electrode active material layer AML1. Any conductive material that does not cause chemical changes to the positive electrode active material layer AML1 may be used, without limitation, as the conductive material CDM. Examples of the conductive material CDM may include a carbon-based material such as or including at least one of natural graphite, artificial graphite, carbon black, acetylene black, ketjen black, a carbon fiber, a carbon nanofiber, and carbon nanotube; a metal-based material containing at least one of copper, nickel, aluminium, silver, etc., in a form of a metal powder or a metal fiber; a conductive polymer such as a polyphenylene derivative; or a mixture thereof.

Hereinafter, each of the first particle PTC1 and the second particle PTC2 are described in more detail.

**First Particle PTC1**

The first particle PTC1 may have a single particle form. In this specification, the term "single particle" may refer to one particle that exists alone without a grain boundary therein. In terms of morphology, the single particle may refer to one particle, a monolith structure, a single unitary structure, or a non-aggregated particle, existing as an independent phase in which particles do not aggregate with each other. For example, the single particle may be a single crystal. Alternatively, the single particle may be or include a particle containing a few crystals. The single particle may be independently separated. Alternatively, the single particle may have a range of about 2 to about 100 single particles bound to each other.

The first particle PTC1 may be or include a fine-sized positive electrode active material. The first particle PTC1 may include at least one first primary particle. In an example embodiment, the first primary particles may fused to have a particle shape that is close to a spherical shape. The first particle PTC1 may not have a spherical shape even though the first primary particles are fused. That is, the first particle PTC1 may also have a random shape.

The first particle PTC1 may have various sizes. For example, the first particle PTC1 may have an average particle diameter in a range of about 100 nm to about 2 $\mu$m, or of about 1.1 $\mu$m. A minimum particle diameter of the first particle PTC1, which is the particle diameter of the first primary particle, may be in a range of about 50 nm to about 500 nm, or about 100 nm to about 200 nm.

In an example embodiment, the average particle diameter may be measured with a particle size analyzer. The average particle diameter may refer to a diameter (D50) of particles at a cumulative volume of about 50 vol% in a particle size distribution.

In an example embodiment, the minimum particle diameter, which is the particle diameter of the first primary particle, may refer to a value obtained by measuring diameters of about 30 first primary particles randomly selected from an electron micrograph of the first particle PTC1.

The first particle PTC1 may have a porosity that is larger than about 40%. The span value obtained by analysis on the first particle PTC1 with a particle size analyzer, may be outside the range of about 0.3 to about 0.75. In this specification, the span value may be defined by the equation of (D90-D10)/D50. D10, D50 and D90 may refer to the particle size of the particles with cumulative volumes of 10 vol%, 50 vol% and 90 vol%, respectively, in the particle size distribution. Here,

$$n = \frac{V_p}{V_t}$$

porosity (n) may be defined as the pore volume (Vp) divided by the total volume (Vt) of a particle, or .

In an example embodiment, the first particle PTC1 may include a first coating layer on a surface thereof. The first coating layer may cover substantially the entire surface of the first particle PTC1, or may cover a portion of the surface of the first particle PTC1. For example, the first coating layer may include carbon and/or a carbon-containing compound. The first coating layer may further include at least one of a titanium-containing compound, a magnesium-containing compound, and a vanadium-containing compound. A metal-containing compound, such as at least one of the titanium-containing compound, the magnesium-containing compound, and the vanadium-containing compound, may be or include, for example, at least one of a metal oxide, a metal hydroxide, a metal carbonate, or a composite or mixture thereof. The metal-containing compound may further include another metal or non-metal element. For example, the metal-containing compound may further include lithium. The first particle PTC1 may have improved structural stability and electrical conductivity due to the first coating layer.

The first particle PTC1 may include an olivine-based lithium compound represented by Formula 1 below.

Formula 1: $\quad Li_{a1}Mn_{x1}Fe_{y1}B_{z1}PO_{4-b1}$

In Formula 1 above, $0.8 \leq a1 \leq 1.2$, $0.4 \leq x1 \leq 0.6$, $0.4 \leq y1 \leq 0.6$, $0 \leq z1 \leq 0.05$, $0 \leq b1 \leq 0.05$, and $x1 + y1 + z1 = 1$ are satisfied. For example, $0.44 \leq x1 \leq 0.55$ may be satisfied.

B is or includes at least one of Al, Ti, V, Mg, and Nb. B may be or include a dopant doped into the first particle PTC1. At least one of Al, Ti, V, Mg, or Nb may control the sizes of the first primary particles to be substantially uniform, and may improve lifespan characteristics of the rechargeable lithium battery.

That is, the first particle PTC1 may be or include an olivine-based lithium compound in which a compound represented by Formula 1-1 below is doped with the above-described B element.

Formula 1-1: $\quad Li_{a1}Mn_{x1}Fe_{y1}PO_{4-b1}$

In Formula 1-1 above, $0.8 \leq a1 \leq 1.2$, $0.4 \leq x1 \leq 0.6$, $0.4 \leq y1 \leq 0.6$, $0 \leq b1 \leq 0.05$, and $x1 + y1 = 1$ may be satisfied.

For example, B may contain at least one of Mg, Ti, or a combination thereof. For example, B may contain Mg and Ti. That is, the first particle PTC1 may be or include an olivine-based lithium compound doped with at least one of Mn, Mg, and Ti. When a combination of Mn, Mg, and Ti is used as a dopant of the first particle PTC1, the lifespan characteristics of the rechargeable lithium battery may be improved, compared with when any single element from Mn, Mg, and Ti is used (for example, when Mn alone is the dopant).

The total doping amount of B may be about in a range of 2000 ppm to about 5000 ppm, or about 4000 ppm to about 5000 ppm. For example, B may be or include Mg and Ti, a doping amount of Mg may be in a range of about 600 ppm to about 2400 ppm, and a doping amount of Ti may be in a range of about 1400 ppm to about 2600 ppm, about 1600 ppm to 2600 ppm, or about 2000 ppm. For example, the ratio of the doping amount of Mg and the doping amount of Ti may be in a range of about 0.1:1 to about 1.5:1, or about 1:1 to about 1.5:1. The doping amount may be defined as the weight of a doping element with respect to the total weight of metals other than lithium (e.g.,, Mn, Fe, Mg, and Ti) of the olivine-based lithium compound represented by Formula 1 above.

The first particle PTC1 may further include carbon derived from the first coating layer, described above. An amount of carbon element in the first particle PTC1 may be in a range of about 0.5 wt% to about 5 wt%, about 0.5 wt% to about 3 wt%, or about 0.5 wt% to about 2 wt%. For example, the amount of carbon element in the first particle PTC1 may be equal to about 2 wt%.

**Second Particle PTC2**

The second particle PTC2 may have a single particle form similarly to the above-described first particle PTC1. The description of the single particle may be the same as or similar to the above description for the first particle PTC1. In an example embodiment, the second particle PTC2 may have be in the form of one single particle. In an example embodiment, the second particle PTC2 may have a plurality of single particles NNP that are bound to each other. For example, the second particle PTC2 may be a single crystal. When the positive electrode active material according to an example embodiment of the present disclosure includes the second particle PTC2 in a single particle form, high capacity and high energy density of the rechargeable battery may be achieved.

In an example embodiment, the second particle PTC2 may include a second coating layer on a surface thereof. Because the second particle PTC2 includes the second coating layer, structural collapse thereof due to repeated charging and discharging may be effectively reduced or suppressed. Accordingly, the lifespan characteristics of the rechargeable battery may be improved.

The second coating layer may include at least one of a boron-containing compound, an aluminium-containing compound, or a combination thereof. A metal-containing compound in the second coating layer may be or include, for example, at least one of a metal oxide, a metal hydroxide, a metal carbonate, or a composite or mixture thereof. The metal-containing compound may further include another metal or non-metal element. For example, the second coating layer may also further include at least one of lithium, manganese, and/or nickel.

Measuring an amount of metal in the second coating layer of the second particle PTC2 may include conducting scanning electron microscope-energy dispersive X-ray spectroscopy (SEM-EDS) analysis on the second particle PTC2. Through the analysis, the amount of boron and/or the amount of aluminium in the second coating layer may be determined. In addition to SEM-EDS, inductively coupled plasma-mass spectrometry (ICP-MS), inductively coupled plasma optical emission spectroscopy (ICP-OES), or the like may be used to measure the amount of metal in the second coating layer.

The second particle PTC2 may have an average particle diameter in a range of about 2 $\mu$m to about 15 $\mu$m, about 2 $\mu$m to about 10 $\mu$m, or about 2 $\mu$m to about 5 $\mu$m. The average particle diameter of the second particle PTC2 is larger than the average particle diameter of the first particle PTC1 described above. When the second particle PTC2 includes a plurality of single particles NNP, the average size of the single particles NNP of the second particle PTC2 may be larger than the average particle diameter of the first particle PTC1.

In an example embodiment, the average particle diameter may be measured with a particle size analyzer. The average particle diameter may refer to a diameter (D50) of particles at a cumulative volume of about 50 vol% in a particle size distribution.

As a nickel-based active material, the second particle PTC2 includes a lithium nickel-based composite oxide. For example, the second particle PTC2 may include a mid-nickel-based positive electrode active material containing a medium content of nickel. The mid-nickel-based positive electrode active material may have desired or improved high-voltage characteristics, and provide high capacity and high performance.

In particular, the second particle PTC2 may include a lithium nickel-based composite oxide with a layered structure, represented by Formula 2 below.

$$\text{Formula 2:} \qquad Li_{a2}Ni_{x2}Co_{y2}Mn_{z2}O_{2-b2}$$

In Formula 2 above, $0.8 \leq a2 \leq 1.2$, $0.5 \leq x2 \leq 0.8$, $0 \leq y2 \leq 0.3$, $0.1 \leq z2 \leq 0.5$, $0 \leq b2 \leq 0.05$, and $x2 + y2 + z2 = 1$ are satisfied. For example, $0.28 \leq z2 \leq 0.34$ may be satisfied.

Referring back to FIG. 6, the positive electrode active material according to example embodiments of the present disclosure is described in more detail. The positive electrode active material according to an example embodiment of the present disclosure includes the first particle PTC1 and the second particle PTC2.

The ratio of an amount (mol%) of manganese (Mn) in the first particle PTC1 to an amount (mol%) of manganese (Mn) in the second particle PTC2 is in a range of about 1.3 to about 2.0. That is, the ratio ($x1/z2$) of $x1$ in Formula 1 to $z2$ in Formula 2 is in a range of about 1.3 to about 2.0, for example, about 1.32 to about 1.96, or about 1.6 to about 1.7. When the value of $x1/z2$ falls within any of the above-described ranges, mixture density of the positive electrode active material and capacity of the rechargeable lithium battery may be improved, and it may be possible to provide an economical positive electrode active material and rechargeable lithium battery.

The mixing ratio of the first particle PTC1 and the second particle PTC2 in the positive electrode active material may be in a range of about 90:10 to about 60:40. Alternatively, the mixing ratio may be about in a range of 80:20 to about 70:30, or about 70:30. An amount of the first particle PTC1 may be greater than an amount of the second particle PTC2 in the positive electrode active material. When the mixing ratio of the first particle PTC1 and the second particle PTC2 in the positive electrode active material falls within any of the above-described ranges, the rechargeable lithium battery may have desired or improved charge-discharge efficiency and lifespan characteristics, and at the same time, may have a high average voltage, high charge-discharge capacity, high energy density, and high mixture density of the positive electrode active material. In addition, it may be possible to provide an economical positive electrode active material and rechargeable lithium battery.

Because the second particle PTC2 may include the mid-nickel-based positive electrode active material, the second particle PTC2 may achieve higher capacity than the first particle PTC1. By mixing the first particle PTC1 and the second particle PTC2 in an appropriate ratio, the positive electrode active material according to this example embodiment may have improved capacity and operating voltage, compared with a general Lithium Iron Phosphate (LFP) or a Lithium Manganese Iron Phosphate (LMFP) battery.

The compound represented by Formula 2 (mid-nickel-based positive electrode active material), described above, may have lower electrical conductivity than the compound represented by Formula 1. According to an example embodiment of the present disclosure, because the second particle PTC2 may be used as a single particle, electrical conductivity and energy density may be improved.

The first particle PTC1 has the advantages of high stability and long lifespan. By using the first particle PTC1, which is structurally stable, as a main material of the positive electrode active material, relatively low stability and low lifespan of the second particle PTC2 may be made up for.

By mixing the second particle PTC2 having a size of several micrometers with the first particle PTC1 having a fine size of hundreds of nanometers as a base, the positive electrode active material according to an example embodiment of the present disclosure may have improved mixture density, capacity, and energy density. In an example embodiment, the compressed (e.g. pellet) density of the positive electrode active material, according to an example embodiment of the present disclosure, may be in a range of about 2.0 g/cc to about 3.1 g/cc, or about 2.4 g/cc to about 3.0 g/cc, or about 2.4 g/cc to about 2.6 g/cc. A rechargeable lithium battery including the positive electrode active material according to an example embodiment of the present disclosure may have improved low-temperature characteristics.

Because the first particle PTC1, which may be a single particle, has an substantially small average particle diameter, a large amount of the binder BND may be required to bind the first particle PTC1 to the current collector COL1 (see FIG. 1). Because the positive electrode active material according to an example embodiment of the present disclosure further includes the second particle PTC2 having a large (e.g. larger) average particle diameter, as well as the first particle PTC1, the positive electrode active material layer AML1 may be readily bound to the current collector COL1. That is, through the second particle PTC2, the amount of the binder BND in the positive electrode active material layer AML1 may be reduced.

The rechargeable lithium battery (see FIG. 1) including the positive electrode active material according to example embodiments of the present disclosure, described above, may have an average voltage of about 3.60 V to about 3.65 V, or about 3.61 V to about 3.62 V when it is discharged with about 0.2 C at a voltage of about 2.5 V to about 4.45 V. The rechargeable lithium battery according to an example embodiment of the present disclosure may have an initial discharge capacity in a range of about 141 mAh/g or greater, about 141 mAh/g to about 165 mAh/g, or about 150 mAh/g to about 160 mAh/g. The rechargeable lithium battery according to an example embodiment of the present disclosure may have an initial efficiency (initial discharge amount/initial charge amount) of about 91% or greater, about 91% to about 100%, or about 91% to about 93%. The rechargeable lithium battery according to an example embodiment of the present disclosure may have a capacity retention rate of about 99% to about 100% after 50 cycles of charging and discharging with a constant current of about 1.0 C at a voltage of about 2.5 V to about 4.45 V. The rechargeable lithium battery according to an example embodiment of the present disclosure may have an energy density in a range of about 500 kWh/kg to about 700 kWh/kg, or about 540 kWh/kg to about 570 kWh/kg.

**Positive Electrode Active Material Slurry**

A positive electrode active material slurry according to an example embodiment of the present disclosure may include the positive electrode active material, the conductive material CDM, the binder BND, described above, and a solvent. Hereinafter, for the convenience of description, the same features as the features described with reference to FIG. 6 are omitted, and the differences are mainly described in detail.

In an example embodiment, the positive electrode active material slurry may have a viscosity of about 7000 mPa·s or less. For example, the viscosity of the positive electrode active material slurry may be in a range of about 1000 mPa·s to about 7000 mPa·s, about 2000 mPa·s to about 6000 mPa·s, or about 3000 mPa·s to about 4000 mPa·s. When the viscosity of the positive electrode active material slurry falls within any of the above-described ranges, a positive electrode active material layer AML1 may be easily bound to a current collector COL1.

The first particle PTC1 and the second particle PTC2 may be bound to the current collector COL1 (see FIG. 1), and the binder BND may improve the binding force between the first particle PTC1, the second particle PTC2, and the current collector COL1 (see FIG. 1).

Because the first particle PTC1 that may be a single particle has a substantially small average particle diameter, the positive electrode active material slurry, according to a comparative embodiment of the present disclosure (i.e. with no second particle PTC2 present), may contain a large amount of the binder BND in preparation of a full cell. In comparative examples, because the first particle PTC1 has a substantially small first average particle diameter, the amount of the binder BND in the positive electrode active material layer AML1 may be large in order to secure the binding force in a desired range between the first particle PTC1 and the current collector COL1 (see FIG. 1) in manufacture of the full cell. For example, the amount of the binder BND may be in a range of about 2 wt% to about 5 wt%, or about 3 wt% to about 5 wt% with respect to 100 wt% of the positive electrode active material layer AML1.

However, because the positive electrode active material according to an example embodiment of the present disclosure further includes the second particle PTC2 having a large average particle diameter, as well as the first particle PTC1 having a small average particle diameter, in the preparation of the full cell, the positive electrode active material slurry according to an example embodiment of the present disclosure may contain a small amount of the binder BND. For example, in the manufacture of the full cell using the positive electrode active material according to an example embodiment of the present disclosure, the amount of the binder BND in the positive electrode active material layer AML1 may be relatively small in order to secure binding force in a desired range between the first particle PTC1, the second particle PTC2, and the current collector COL1 (see FIG. 1). For example, the amount of the binder BND may be in a range of about 0.5 wt% to about 3 wt%, or about 0.5 wt% to about 2 wt% with respect to 100 wt% of the positive electrode active material layer AML1. Consequently, according to an example embodiment of the present disclosure, the amount of the binder BND in the positive electrode active material layer AML1 may be reduced through the second particle PTC2.

**Preparation Method of Positive Electrode Active Material**

The preparation of a first particle PTC1 according to example embodiments of the present disclosure is described in detail. A manganese iron phosphate precursor, a lithium source, a carbon source, and a dopant source may be added to a solvent and mixed. For example, the solvent may be water, ethanol, or the like.

The manganese iron phosphate precursor may be or include a compound containing all of manganese (Mn), iron (Fe), and phosphorus (P); a mixture of a manganese (Mn)-containing compound and an iron (Fe) and phosphorus (P)-containing compound; or a mixture of a manganese (Mn)-containing compound, an iron (Fe)-containing compound, and a phosphorus (P)-containing compound. For example, the manganese iron phosphate precursor may include $Mn_xFe_{1-x}PO_4 \cdot H_2O$; a mixture of $MnCO_3$ and $FePO_4 \cdot H_2O$; or a mixture of $MnCO_3$, $FeSO_4$, and $H_3PO_4$. Here, x may be about 0.2 to about 0.8.

The lithium source may include at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one of aluminium oxide, aluminium chloride, titanium oxide, titanium chloride, vanadium oxide, vanadium chloride, magnesium oxide, magnesium chloride, niobium oxide, and niobium chloride. For example, the dopant source may include one of the titanium oxide or the titanium chloride, and one of the magnesium oxide or the magnesium chloride.

Wet grinding may be performed on the mixture. For the wet grinding, a general wet mill capable of temperature control may be used. In particular, at least one of a beads mill, a ball mill, an attrition mill, an apex mill, a super mill, and a basket mill may be used for the wet grinding. Through the wet grinding process, particles in the mixture may be ground to a fine size.

The solvent may be removed from the mixture to form a dried mixture. According to an example embodiment of the present disclosure, the forming of the dried mixture may include performing direct evaporation on the mixture. For example, the direct evaporation may include static drying or spray drying.

The dried mixture may be calcined in an inert atmosphere. The inert atmosphere may be or include a nitrogen atmosphere and/or an argon atmosphere. The temperature at which the calcination process is performed may be about 500 °C to about 1000 °C, or about 600 °C to about 800 °C. The execution time of the calcination process may be in a range of about 4 hours to about 20 hours, or about 6 hours to about 12 hours. As the dried mixture is calcined, the first particle PTC1 containing the compound represented by Formula 1, described above, may be formed.

Dry grinding may be performed on the calcined first particle PTC1. The calcined mixture may be ground using, e.g., an air jet mill, or the like. Accordingly, the first particle PTC1 may be in the form of a single particle as illustrated in FIG. 6.

Preparation of a second particle PTC2 according to example embodiments of the present disclosure is described in detail. A mid-nickel-based precursor may be prepared. The mid-nickel-based precursor may contain Ni in Formula 2 described above. An amount of Ni with respect to the total amount of metal in the mid-nickel-based precursor may be about 50 at% to about 80 at%. In an example embodiment, the mid-nickel-based precursor may further contain Co and Mn.

In an example embodiment, the mid-nickel-based precursor may be obtained through coprecipitation. For example, the coprecipitation may include dissolving a transition metal raw material in a solvent such as distilled water, and substantially continuously adding a transition metal salt solution to a reactor along with a chelating agent and an alkaline aqueous solution to cause precipitation. A precipitate may be collected in the form of a slurry, and then a slurry solution may be filtered and dried to obtain the mid-nickel-based precursor that is a metal composite oxide.

According to an example embodiment of the present disclosure, the transition metal raw material may include a metal salt of Ni. The transition metal raw material may further include a metal salt of at least one of Co or Mn. The metal salt may include at least one of sulfate, nitrate, acetate, halide, a hydroxide, or the like, and the material is not particularly limited as long as the material is dissolved in a solvent. The transition metal raw material according to these example embodiments may include at least one of nickel salt, cobalt salt, and manganese salt. The transition metal raw material may be mixed by adjusting the molar ratio such that an amount of Ni in the mid-nickel-based precursor is in a range of about 50 at% to about 80 at%.

The mid-nickel-based precursor and the lithium source may be mixed in a given ratio to form a mixture. For example, the mid-nickel-based precursor and the lithium source may be mixed in a molar ratio of about 1:1. The lithium source may include at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The solvent may be removed from the mixture to form a dried mixture. The dried mixture may be calcined. The temperature at which the calcination process is performed may be in a range of about 700 °C to about 1000 °C, or about 900 °C to about 1000 °C. The calcination process may be performed in an oxidation atmosphere such as air or oxygen. A heat treatment time of the calcination process may be in a range of about 10 hours to about 30 hours. According to another example embodiment of the present disclosure, a preliminary calcination may also be additionally performed at a temperature in a range of about 150 °C to about 800 °C before the calcination process.

According to an example embodiment of the present disclosure, the calcination process may be performed after flux is further added to the mixture. The flux may be or include a compound containing at least one metal such as or including at least one of Zr, La, S, and Nb. By using the flux, the second particle PTC2 may be formed substantially smoothly into a single particle. In addition, the average particle diameter of the second particle PTC2 may become large.

Through the calcination process, the second particle PTC2 may be formed from the mixture including the mid-nickel-based precursor and the lithium source. A grinding process may be performed on the synthesized second particle PTC2.

A coating process may be performed on the ground second particle PTC2. In particular, the second particle PTC2 and a coating raw material may be added to a solvent and mixed. For example, the coating raw material may contain boron and/or aluminium. The second particle PTC2 may be filtered and dried, and then a surface treatment may be performed on the second particle PTC2. The surface treatment may include a heat treatment process in an oxidation atmosphere such as, e.g., air or oxygen. The surface treatment may be performed at a temperature in a range of about 500 °C to about 800 °C.

According to another example embodiment of the present disclosure, the coating process may include a dry-coating process. For example, the second particle PTC2 and the coating raw material may be added to a dry-coating machine without a solvent, and agitated and mixed. The surface treatment may be performed on the obtained dry mixture.

By mixing the first particle PTC1 and the second particle PTC2 prepared in the respective methods described above, the positive electrode active material according to an example embodiment of the present disclosure may be prepared. The first particle PTC1 and the second particle PTC2 may be mixed in a weight ratio in a range of about 90:10 to about 60:40, e.g., about 80:20 to about 70:30, or about 70:30.

Analysis on a carbon element according to example embodiments of the present disclosure may be performed using an Elementar Micro Cube elemental analyzer. The specific operation method and conditions are as follows. A sample of about 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface were conducted to measure the carbon content according to example embodiments of the present disclosure. In addition to SEM-EDS, inductively coupled plasma-mass spectrometry (ICP-MS), inductively coupled plasma optical emission spectroscopy (ICP-OES), or the like may be used to measure the carbon content.

Hereinafter, the present disclosure is described in more detail with reference to examples. However, the following examples are merely presented to exemplify the present disclosure, and the scope of the present disclosure is not limited thereto.

### Example 1: Preparation of First Particle

A manganese iron phosphate precursor ($Mn_{0.5}Fe_{0.5}PO_4$), lithium carbonate, magnesium dioxide, and titanium dioxide were added to water in a molar ratio of (Mn+Fe):Li:Mg:Ti of about 1:1.03:0.01:0.004. 10 wt% of glucose was further added to the mixture. Wet grinding was performed on the mixture by ball milling. The mixture was dried over evaporation on a tray by heating, and then dried in a vacuum oven at about 85 °C for about 4 hours. The dried mixture was calcined in a nitrogen atmosphere at about 650 °C for about 10 hours. The calcined product was ground to obtain a first particle in the form of a single particle. The formula of the first particle was about $LiMn_{0.5}Fe_{0.5}PO_4$, the doping amount of Mg was about 2400 ppm, and the doping amount of Ti was about 2000 ppm.

### Example 2: Preparation of Second Particle

A mid-nickel-based precursor was prepared through coprecipitation. In particular, as a raw material of nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water, which is a solvent, to have a molar ratio of about 60:10:30, and thus a metal raw material mixed solution was prepared. The metal raw material mixed solution, ammonia water, and sodium hydroxide were added to a reactor and reacted. The slurry solution in the reactor was filtered and washed with high-purity distilled water. The washed material was dried in a hot air oven at about 210 °C for about 24 hours to obtain small-particle precursor ($Ni_{0.60}Co_{0.10}Mn_{0.30}(OH)_2$) powder having an average particle diameter of about 4 $\mu$m.

The mid-nickel-based precursor and anhydrous lithium hydroxide (LiOH) were dry-mixed using a Henschel mixer. Lithium and a transition metal were mixed in a molar ratio of about 1.03:1. The transition metal is the sum (Ni+Co+Mn) of transition metals contained in the mid-nickel-based precursor. Flux was further added to the mixture, and heat treatment (that is, calcination process) was performed in an oxygen atmosphere at about 850 °C for about 15 hours to synthesize a second particle which is a mid-nickel-based positive electrode active material. The second particle was ground using a jet mill at 3 bar pressure.

The second particle was added to distilled water and washed. Boron oxide and aluminium oxide, corresponding to about 3 mol% with respect to the sum of transition metals of the second particle, were added to perform boron and aluminium coating. The second particle was dried at about 150 °C for about 12 hours, and in an oxygen atmosphere, heat treatment (that is, surface treatment) was performed at about 700 °C for about 15 hours. The formula of the second particle was $LiNi_{0.6}Co_{0.1}Mn_{0.3}O_2$.

### Example 3: Mixture Preparation of First Particle and Second Particle

The first particle according to Example 1 and the second particle according to Example 2 were mixed in a mass ratio of about 90:10 to prepare a positive electrode active material. x1/z2 was about 1.67.

### Example 4: Mixture Preparation of First Particle and Second Particle

The first particle according to Example 1 and the second particle according to Example 2 were mixed in a mass ratio of about 80:20 to prepare a positive electrode active material. x1/z2 was about 1.67.

**Example 5: Mixture Preparation of First Particle and Second Particle**

The first particle according to Example 1 and the second particle according to Example 2 were mixed in a mass ratio of about 70:30 to prepare a positive electrode active material. x1/z2 was about 1.67.

**Example 6: Mixture Preparation of First Particle and Second Particle**

The first particle according to Example 1 and the second particle according to Example 2 were mixed in a mass ratio of about 60:40 to prepare a positive electrode active material. x1/z2 was about 1.67.

**Comparative Example 1: Preparation of First Particle**

The first particle was prepared in the same manner as in Example 1, with a difference that a manganese iron phosphate precursor ($Mn_{0.6}Fe_{0.4}PO_4$), lithium carbonate, magnesium dioxide, and titanium dioxide were added to water in a molar ratio of (Mn+Fe):Li:Mg:Ti of about 1:1.03:0.0025:0.004. The formula of the first particle was about $LiMn_{0.6}Fe_{0.4}PO_4$, the doping amount of Mg was about 600 ppm, and the doping amount of Ti was about 2000 ppm.

**Comparative Example 2: Preparation of First Particle**

The first particle was prepared in the same manner as in Example 1 with a difference that a manganese iron phosphate precursor ($Mn_{0.55}Fe_{0.45}PO_4$), lithium carbonate, magnesium dioxide, and titanium dioxide were added to water in a molar ratio of (Mn+Fe):Li:Mg:Ti of about 1:1.03:0.0025:0.004. The formula of the first particle was about $LiMn_{0.55}Fe_{0.45}PO_4$, the doping amount of Mg was about 600 ppm, and the doping amount of Ti was about 2000 ppm.

**Comparative Example 3: Preparation of First Particle**

The first particle was prepared in the same manner as in Example 1, with a difference that a manganese iron phosphate precursor ($Mn_{0.5}Fe_{0.5}PO_4$), lithium carbonate, magnesium dioxide, and titanium dioxide were added to water in a molar ratio of (Mn+Fe):Li:Mg:Ti of about 1:1.03:0.0025:0.004. The formula of the first particle was about $LiMn_{0.5}Fe_{0.5}PO_4$, the doping amount of Mg was about 600 ppm, and the doping amount of Ti was about 2000 ppm.

**Comparative Example 4: Preparation of First Particle**

The first particle was prepared in the same manner as in Example 1 with a difference that a manganese iron phosphate precursor ($Mn_{0.45}Fe_{0.55}PO_4$), lithium carbonate, magnesium dioxide, and titanium dioxide were added to water in a molar ratio of (Mn+Fe):Li:Mg:Ti of about 1:1.03:0.0025:0.004. The formula of the first particle was about $LiMn_{0.45}Fe_{0.55}PO_4$, the doping amount of Mg was about 600 ppm, and the doping amount of Ti was about 2000 ppm.

**Comparative Example 5: Preparation of First Particle**

The first particle was prepared in the same manner as in Example 1 with a difference that a manganese iron phosphate precursor ($Mn_{0.4}Fe_{0.6}PO_4$), lithium carbonate, magnesium dioxide, and titanium dioxide were added to water in a molar ratio of (Mn+Fe):Li:Mg:Ti of about 1:1.03:0.0025:0.004. The formula of the first particle was about $LiMn_{0.4}Fe_{0.6}PO_4$, the doping amount of Mg was about 600 ppm, and the doping amount of Ti was about 2000 ppm.

**Reference Example 6: Mixture Preparation of First Particle and Second Particle**

The first particle according to Example 1 and the second particle according to Example 2 were mixed in a mass ratio of about 50:50 to prepare a positive electrode active material. x1/z2 was about 1.67.

**Comparative Example 7: Preparation of First Particle**

The first particle was prepared in the same manner as in Example 1 with a difference that a manganese iron phosphate precursor ($Mn_{0.7}Fe_{0.3}PO_4$), lithium carbonate, magnesium dioxide, and titanium dioxide were added to water in a molar ratio of (Mn+Fe):Li:Mg:Ti of about 1:1.03:0.01:0.004. The formula of the first particle was about $LiMn_{0.7}Fe_{0.3}PO_4$, the doping amount of Mg was about 2400 ppm, and the doping amount of Ti was about 2000 ppm.

**Comparative Example 8: Preparation of First Particle**

The first particle was prepared in the same manner as in Example 1 with a difference that a manganese iron phosphate precursor ($Mn_{0.3}Fe_{0.7}PO_4$), lithium carbonate, magnesium dioxide, and titanium dioxide were added to water in a molar ratio of (Mn+Fe):Li:Mg:Ti of about 1:1.03:0.01:0.004. The formula of the first particle was about $LiMn_{0.3}Fe_{0.7}PO_4$, the doping amount of Mg was about 2400 ppm, and the doping amount of Ti was about 2000 ppm.

**Comparative Example 9: Mixture Preparation of First Particle and Second Particle**

The first particle according to Comparative Example 7 and the second particle according to Example 2 were mixed in a mass ratio of about 70:30 to prepare a positive electrode active material. x1/z2 was greater than about 2.

**Comparative Example 10: Mixture Preparation of First Particle and Second Particle**

The first particle according to Comparative Example 8 and the second particle according to Example 2 were mixed in a mass ratio of about 70:30 to prepare a positive electrode active material. x1/z2 was less than about 1.3.

**Preparation of Positive Electrode**

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminum current collector and dried, and then rolling was performed to prepare a positive electrode.

**Manufacture of Rechargeable Lithium Battery**

The prepared positive electrode and a lithium metal counter electrode, as a counter electrode, were used to prepare a 2032-type coin half-cell. A separator (thickness: about 16 μm) formed of or including a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

The details of Examples 1 to 6, Reference Example 6 and Comparative Examples 1 to 5 and 7 to 10 are illustrated in Table 1.

Table 1:

| Classification | Form | Formula | x1/z2 |
|---|---|---|---|
| Example 1 | Single particle | $LiMn_{0.5}Fe_{0.5}PO_4$ | - |
| Example 2 | Single particle | $LiNi_{0.6}Co_{0.1}Mn_{0.3}O_2$ | - |
| Example 3 | Example 1: Example 2 = 90:10 | | 1.67 |
| Example 4 | Example 1: Example 2 = 80:20 | | 1.67 |
| Example 5 | Example 1: Example 2 = 70:30 | | 1.67 |
| Example 6 | Example 1: Example 2 = 60:40 | | 1.67 |
| Comparative Example 1 | Single particle | $LiMn_{0.6}Fe_{0.4}PO_4$ | - |
| Comparative Example 2 | Single particle | $LiMn_{0.55}Fe_{0.45}PO_4$ | - |
| Comparative Example 3 | Single particle | $LiMn_{0.5}Fe_{0.5}PO_4$ | - |
| Comparative Example 4 | Single particle | $LiMn_{0.45}Fe_{0.55}PO_4$ | - |
| Comparative Example 5 | Single particle | $LiMn_{0.4}Fe_{0.6}PO_4$ | - |
| Reference Example 6 | Example 1: Example 2 = 50:50 | | 1.67 |
| Comparative Example 7 | Single particle | $LiMn_{0.7}Fe_{0.3}PO_4$ | - |
| Comparative Example 8 | Single particle | $LiMn_{0.3}Fe_{0.7}PO_4$ | - |

(continued)

| Classification | Form | Formula | x1/z2 |
|---|---|---|---|
| Comparative Example 9 | Comparative Example 7: Example 2 = 70:30 | >2 |
| Comparative Example 10 | Comparative Example 8: Example 2 = 70:30 | <1.3 |

**Evaluation Example 1: Surface Analysis of Positive Electrode Active Material**

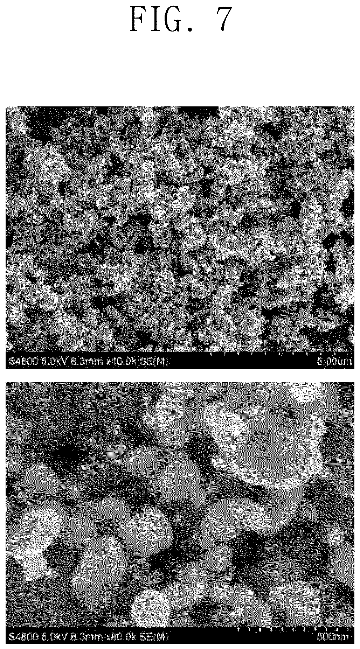

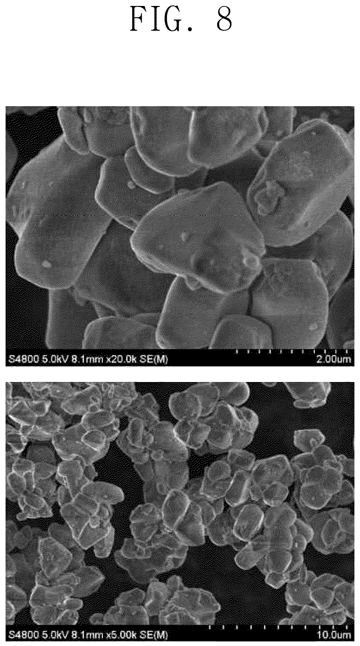

FIG. 7 shows a scanning electron microscope (SEM) image of the first particle prepared according to Example 1. FIG. 8 shows a SEM image of the second particle prepared according to Example 2. Referring to FIG. 7, the first particle according to Example 1 of the present disclosure is in the form of a fine-sized single particle. Referring to FIG. 8, the second particle according to Example 2 of the present disclosure is in the form of a micrometer-sized single particle. The second particle is in the form of one single particle, or of a plurality of single particles bound to each other.

**Evaluation Example 2: Evaluation on Active Material**

The pellet densities (PD) of the positive electrode active materials according to Examples 1 to 6, Reference Example 6 and Comparative Examples 1 to 5 and 7 to 10 were measured, and the results were listed in Table 2 below. The pellet density was measured and recorded within the range of 3.0000 g (with an error margin of $\pm$ 0.0004 g) for the positive electrode active material. The positive electrode active material was pressed using a 13 mm KBr Pellet Die at 4 tons of pressure for 30 seconds, after which the height reduction was measured and the weight per volume was determined.

Table 2:

| Classification | Pellet density (g/cc) |
|---|---|
| Example 1 | 2.33 |
| Example 2 | 3.10 |
| Example 3 | 2.42 |
| Example 4 | 2.47 |
| Example 5 | 2.56 |
| Example 6 | 2.63 |
| Comparative Example 1 | 2.35 |
| Comparative Example 2 | 2.34 |
| Comparative Example 3 | 2.36 |
| Comparative Example 4 | 2.32 |
| Comparative Example 5 | 2.35 |
| Reference Example 6 | 2.67 |
| Comparative Example 7 | 2.15 |
| Comparative Example 8 | 2.38 |
| Comparative Example 9 | 2.45 |
| Comparative Example 10 | 2.57 |

The positive electrode active materials according to Examples 3 to 6 have higher compressed densities than the positive electrode active materials according to Comparative Examples 1 to 5, 7 and 8, and Example 1.

**Evaluation Example** 3: **Evaluation on** Battery Characteristics

Characteristics of rechargeable lithium batteries prepared using the positive electrode active materials according to Examples 1 to 6, Reference Example 6, and Comparative Examples 1 to 5 and 7 to 10 were evaluated.
For initial charging and discharging, the rechargeable lithium battery was initially charged under conditions of a constant current (0.2 C) and a constant voltage (4.45 V) (cut-off 0.05C) at 25 °C, was rested for about 10 minutes and then discharged with a constant current (0.2 C) until a voltage reached 3.0 V and measure the initial charge capacity and initial discharge capacity, and the initial efficiency (%) is expressed as the initial discharge capacity / initial charge capacity. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) $\times$ capacity (Ah)/cell weight (kg)}, wherein the capacity was calculated by multiplying a positive electrode weight (g) and discharge capacity (mAh/g). Thereafter, the charging and discharging cycle was repeated 50 times at about 25 °C under about 1.0 C/1.0 C conditions, and the lifespan (%) at 50 cycles is expressed as the discharge capacity / initial discharge capacity after the 50th cycle. In addition, a coin cell was additionally manufactured and the batteries were initially charged at a constant current of 0.2 C and a constant voltage (4.45 V) (cut-off 0.05C), and after 10 minutes of rest, discharged up to 3.0 V at a constant current of 0.2 C, and measure the discharge capacity at about -20 °C. The results of evaluating the battery characteristics were listed in Table 3 below.

Table 3:

| Classification | Charge amount (mAh/g) | Discharge amount (mAh/g) | Efficiency (%) | Capacity at -20 °C (mAh/g) | Average voltage (V) | Lifespan (%) at 50cycles | Energy density (kWh/kg) |
|---|---|---|---|---|---|---|---|
| Example 1 | 147.5 | 137.5 | 93.2 | 100 | 3.60 | 99.7 | 495.00 |
| Example 2 | 221.3 | 196.3 | 88.7 | 65 | 3.65 | 98.4 | 716.50 |
| Example 3 | 155.1 | 144.2 | 93.0 | 94.2 | 3.61 | 99.6 | 520.56 |
| Example 4 | 162.2 | 150.8 | 93.0 | 92.0 | 3.61 | 99.4 | 544.39 |
| Example 5 | 170.3 | 156.2 | 91.7 | 88.2 | 3.62 | 99.4 | 564.66 |
| Example 6 | 177.0 | 161.8 | 91.4 | 86.0 | 3.62 | 98.9 | 585.72 |
| Comparative Example 1 | 146.1 | 136.2 | 93.2 | 96 | 3.60 | 99.1 | 490.32 |
| Comparative Example 2 | 147.1 | 136.8 | 93.0 | 98 | 3.60 | 99.3 | 492.48 |
| Comparative Example 3 | 148.0 | 138.0 | 93.2 | 102 | 3.60 | 99.5 | 496.80 |
| Comparative Example 4 | 150.0 | 139.0 | 92.7 | 95 | 3.56 | 99.2 | 494.84 |
| Comparative Example 5 | 152.0 | 140.8 | 92.6 | 90 | 3.52 | 99.1 | 495.62 |
| Reference Example 6 | 183.3 | 167.5 | 91.4 | 82 | 3.62 | 98.4 | 606 |
| Comparative Example 7 | 143.2 | 132.8 | 92.7 | 95 | 3.61 | 95.4 | 479 |
| Comparative Example 8 | 152.2 | 141.6 | 93.0 | 96 | 3.5 | 96.5 | 496 |
| Comparative Example 9 | 166.6 | 151.9 | 91.5 | 86.0 | 3.6 | 96.3 | 550.3 |
| Comparative Example 10 | 172.9 | 158.0 | 91.7 | 86.7 | 3.5 | 97.1 | 562.2 |

Referring to Table 3, the rechargeable batteries according to Examples 3 to 6 have significantly increased voltages, capacities, and energy densities, compared with the rechargeable batteries according to Comparative Examples 1 to 5 and 7 to 10 and Example 1. In addition, the rechargeable batteries according to Examples 3 to 6 have similar or higher capacity retention rates than the rechargeable batteries according to Comparative Examples 1 to 5 and 7 to 10 and Example 1.

In particular, the rechargeable batteries according to Examples 3 to 6 exhibited desired or improved results all in voltage, capacity, energy density, and capacity retention rate, compared with the rechargeable batteries according to Example 1 and Reference Example 6. That is, when the mixing ratio of the first particle and the second particle falls within a desired range, characteristics of the rechargeable lithium battery were desired or improved.

The rechargeable battery according to Example 5 exhibited desired or improved results all in voltage, capacity, energy density, and capacity retention rate, compared with the rechargeable batteries according to Comparative Examples 9 and 10. That is, when the value of x1/z2 falls within a desired range, characteristics of the rechargeable lithium battery were desired or improved.

Accordingly, the rechargeable batteries according to Examples 3 to 6 not only have high capacities but also have long lifespans even though the batteries were used at a high voltage.

A positive electrode active material according to an example embodiment of the present disclosure may have improved mixture density (compressed density and pellet density), and improved capacity and energy density. A positive electrode active material layer according to an example embodiment of the present disclosure may be easily bound to a positive electrode current collector with a relatively small amount of a binder. A rechargeable lithium battery according to an example embodiment of the present disclosure may have relatively high average voltage, charge-discharge capacity, efficiency, and energy density, and may have desired or improved lifespan characteristics (capacity retention rate). An example embodiment of the present disclosure may provide an economical positive electrode active material and rechargeable lithium battery.

Although the example embodiments of the present disclosure have been described with reference to the accompanying drawings, it is understood that the present disclosure should not be limited to these example embodiments, but various changes and modifications can be made by one ordinary skilled in the art within the scope of the present disclosure as hereinafter claimed. Therefore, the example embodiments described above should be understood in all respects as illustrative and not limiting.

**Claims**

1.   A positive electrode active material comprising:

a first particle containing a compound represented by Formula 1, and having a first average particle diameter; and
a second particle containing a compound represented by Formula 2, and having a second average particle diameter larger than the first average particle diameter,
wherein a ratio (x1/z2) of x1 in Formula 1 to z2 in Formula 2 is in a range of about 1.3 to about 2.0:

Formula 1:          $Li_{a1}Mn_{x1}Fe_{y1}B_{z1}PO_{4-b1}$

where, in Formula 1, $0.8 \leq a1 \leq 1.2$, $0.4 \leq x1 \leq 0.6$, $0.4 \leq y1 \leq 0.6$, $0 \leq z1 \leq 0.05$, $0 \leq b1 \leq 0.05$, and $x1 + y1 + z1 = 1$, and B comprises at least one of Al, Ti, V, Mg, and Nb,

Formula 2:          $Li_{a2}Ni_{x2}Co_{y2}Mn_{z2}O_{2-b2}$

where, in Formula 2, $0.8 \leq a2 \leq 1.2$, $0.5 \leq x2 \leq 0.8$, $0 \leq y2 \leq 0.3$, $0.1 \leq z2 \leq 0.5$, $0 \leq b2 \leq 0.05$, and $x2 + y2 + z2 = 1$.

2.   The positive electrode active material of claim 1, wherein:

$0.44 \leq x1 \leq 0.55$, and
$0.28 \leq z2 \leq 0.34$.

3.   The positive electrode active material of claim 1 or claim 2, wherein a mixing ratio of the first particle and the second particle is in a range of about 90:10 to about 60:40.

4.   The positive electrode active material of any one of claims 1 to 3, wherein at least one of the first particle and the second particle is a single particle.

5.   The positive electrode active material of any one of claims 1 to 4, wherein:

the second particle comprises a plurality of single particles bound to each other, and
the first average particle diameter is smaller than an average particle diameter of the plurality of single particles.

6.   The positive electrode active material of any one of claims 1 to 5, wherein:

B comprises at least one of Mg and Ti, and
a total doping amount of B is in a range of about 2000 ppm to about 5000 ppm.

7.   The positive electrode active material of claim 6, wherein:

B comprises Mg and Ti, and
a ratio of a doping amount of Mg to a doping amount of Ti is in a range of about 0.1:1 to about 1.5:1.

8.  The positive electrode active material of any one of claims 1 to 7, wherein:

    the first particle comprises a first coating layer containing carbon, and
    an amount of carbon in the first particle is in a range of about 0.5 wt% to about 2 wt%.

9.  The positive electrode active material of any one of claims 1 to 8, wherein:

    the second particle comprises a second coating layer, and
    the second coating layer comprises at least one of a boron-containing compound, and an aluminium-containing compound.

10. The positive electrode active material of any one of claims 1 to 9, wherein the first average particle diameter is in a range of about 100 nm to about 2 $\mu$m.

11. The positive electrode active material of any one of claims 1 to 10, wherein the second average particle diameter is in a range of about 2 $\mu$m to about 5 $\mu$m.

12. The positive electrode active material of any one of claims 1 to 11, wherein a compressed density of the positive electrode active material is in a range of about 2.4 g/cc to about 3.0 g/cc.

13. A positive electrode for a rechargeable lithium battery, the positive electrode comprising:

    a positive electrode current collector; and
    a positive electrode active material layer on the positive electrode current collector,
    wherein the positive electrode active material layer includes the positive electrode active material of any one of claims 1 to 12, a conductive material, and a binder.

14. A rechargeable lithium battery comprising:

    the positive electrode of claim 13;
    a negative electrode including a negative electrode current collector and a negative electrode active material layer on the negative electrode current collector; and
    a separator between the positive electrode and the negative electrode.

15. The rechargeable lithium battery of claim 14, wherein:

    an initial discharge capacity is about 141 mAh/g or greater, and
    an initial efficiency is about 91% or greater.

# FIG. 1

ELL

COL1 AML1    30    COL2 AML2

10                    20

# FIG. 2

# FIG. 3

EP 4 645 460 A1

# FIG. 4

# FIG. 5

# FIG. 6

# FIG. 7

# FIG. 8

Europäisches
Patentamt

European
Patent Office

Office européen
des brevets

# EUROPEAN SEARCH REPORT

**Application Number**

EP 25 16 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 224 579 A1 (CONTEMPORARY AMPEREX TECHNOLOGY CO LTD [CN]) 9 August 2023 (2023-08-09) * paragraphs [0005], [0150], [0151]; claims 1, 11, 12; tables 1, 2, 3 * ----- | 1,3,4,6, 7,9-14 | INV. H01M4/36 H01M4/131 H01M4/505 H01M4/525 H01M4/58 H01M10/0525 |
| X | EP 2 357 693 A1 (GS YUASA INT LTD [JP]) 17 August 2011 (2011-08-17) * paragraphs [0013], [0017], [0024], [0030], [0066], [0083], [0098]; claims 1, 4; table 2 * ----- | 1,2,4, 6-9, 12-15 | |
| X | ZHAO XINXIN ET AL: "Journal of The Electrochemical Society LiNi 0.5 Co 0.2 Mn 0.3 O 2 -LiMn 0.6 Fe 0.4 PO 4 Mixture with Both Excellent Electrochemical Performance and Low Cost as Cathode Material for Power Lithium Ion Batteries3 O 2 -LiMn 0.6 Fe 0.4 PO 4 Mixture with Both Excellent Electrochemical Performance and Low", JOURNAL OF THE ELECTROCHEMICAL SOCIETY, vol. 165, no. 2, 9 January 2018 (2018-01-09), pages A142-A148, XP055802261, * pages 143, 144; figures 3, 4 * ----- -/-- | 1,4-7, 9-14 | TECHNICAL FIELDS SEARCHED (IPC) H01M |

The present search report has been drawn up for all claims

| Place of search | Date of completion of the search | Examiner |
|---|---|---|
| The Hague | 17 September 2025 | Di Berardino, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 16 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HERZOG MARCEL J. ET AL: "Facile Dry Coating Method of High-Nickel Cathode Material by Nanostructured Fumed Alumina (Al 2 O 3 ) Improving the Performance of Lithium-Ion Batteries", ENERGY TECHNOLOGY, vol. 9, no. 4, 23 January 2021 (2021-01-23), page 2100028, XP055855841, DE ISSN: 2194-4288, DOI: 10.1002/ente.202100028 * Abstract * ----- | 9 | |
| A | LYU WEI ET AL: "Thermodynamic equilibrium theory-guided design and synthesis of Mg-doped LiFe0.4Mn0.6PO4/C cathode for lithium-ion batteries", JOURNAL OF ENERGY CHEMISTRY, ELSEVIER, AMSTERDAM, NL, vol. 91, 28 December 2023 (2023-12-28), pages 619-627, XP087490305, ISSN: 2095-4956, DOI: 10.1016/J.JECHEM.2023.12.016 [retrieved on 2023-12-28] * Abstract; page 625 * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 17 September 2025 | Di Berardino, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

**Application Number**

EP 25 16 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIN HONGBO ET AL: "Dual Modification of Olivine LiFe 0.5 Mn 0.5 PO 4 Cathodes with Accelerated Kinetics for High-Rate Lithium-Ion Batteries", INDUSTRIAL & ENGINEERING CHEMISTRY RESEARCH, vol. 62, no. 2, 3 January 2023 (2023-01-03), pages 1029-1034, XP093315139, ISSN: 0888-5885, DOI: 10.1021/acs.iecr.2c04303 * page 1031; figure 2 * ----- | 1-15 | |
| A | EP 2 737 565 B1 (A123 SYSTEMS LLC [US]) 25 September 2019 (2019-09-25) * paragraph [0116] - paragraph [0126] * ----- | 1-15 | |
| A | EP 2 806 487 B1 (LG CHEMICAL LTD [KR]) 25 May 2016 (2016-05-25) * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 17 September 2025 | Di Berardino, F |

EPO FORM 1503 03.82 (P04C01)

## ANNEX TO THE EUROPEAN SEARCH REPORT
## ON EUROPEAN PATENT APPLICATION NO.

EP 25 16 9246

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2025

| Patent document cited in search report | | Publication date | Patent family member(s) | | Publication date |
|---|---|---|---|---|---|
| EP 4224579 | A1 | 09-08-2023 | CN | 116601794 A | 15-08-2023 |
| | | | CN | 119153653 A | 17-12-2024 |
| | | | CN | 119297222 A | 10-01-2025 |
| | | | EP | 4224579 A1 | 09-08-2023 |
| | | | US | 2023261175 A1 | 17-08-2023 |
| | | | WO | 2023108352 A1 | 22-06-2023 |
| EP 2357693 | A1 | 17-08-2011 | CN | 102210047 A | 05-10-2011 |
| | | | EP | 2357693 A1 | 17-08-2011 |
| | | | JP | 5381024 B2 | 08-01-2014 |
| | | | JP | 5574239 B2 | 20-08-2014 |
| | | | JP | 2011159388 A | 18-08-2011 |
| | | | JP | WO2010053174 A1 | 05-04-2012 |
| | | | KR | 20110083680 A | 20-07-2011 |
| | | | US | 2011223482 A1 | 15-09-2011 |
| | | | WO | 2010053174 A1 | 14-05-2010 |
| EP 2737565 | B1 | 25-09-2019 | CN | 103828099 A | 28-05-2014 |
| | | | EP | 2737565 A1 | 04-06-2014 |
| | | | JP | 6396799 B2 | 26-09-2018 |
| | | | JP | 2014524133 A | 18-09-2014 |
| | | | KR | 20140068893 A | 09-06-2014 |
| | | | US | 2014138591 A1 | 22-05-2014 |
| | | | WO | 2013016426 A1 | 31-01-2013 |
| EP 2806487 | B1 | 25-05-2016 | CN | 104396066 A | 04-03-2015 |
| | | | EP | 2806487 A1 | 26-11-2014 |
| | | | JP | 6037003 B2 | 30-11-2016 |
| | | | JP | 2015519005 A | 06-07-2015 |
| | | | KR | 20140018543 A | 13-02-2014 |
| | | | US | 2014322605 A1 | 30-10-2014 |
| | | | WO | 2014021685 A1 | 06-02-2014 |

EPO FORM P0459

For more details about this annex : see Official Journal of the European Patent Office, No. 12/82